# EUROPÄISCHE PATENTSCHRIFT

(11) **EP 1 022 075 B1**
(45) Veröffentlichungstag und Bekanntmachung des Hinweises auf die Patenterteilung: **30.03.2005**
(21) Anmeldenummer: 00101160.0
(22) Anmeldetag: 21.01.2000
(51) Int. Cl.: B21H 3/04, B21B 27/03, F16D 1/12, F16D 1/072, B23B 31/40

(54) **Vorrichtung zum Bearbeiten eines Werkstückes mit einem Werkzeug**
Device for machining a workpiece with a tool
Dispositif pour usiner une pièce avec un outil

(30) Priorität: 25.01.1999 DE 29901224 U
(43) Veröffentlichungstag der Anmeldung: 26.07.2000
(73) Patentinhaber: ROLLWALZTECHNIK ABELE + HÖLTICH GMBH, D-78234 Engen (DE)
(72) Erfinder: Höltich,Hermann, 78269 Volkertshausen (DE)
(74) Vertreter: Weiss, Peter, Dr.

(56) Entgegenhaltungen:
- GB-A- 1 214 434
- US-A- 1 392 363
- US-A- 3 013 827

## Beschreibung

Die Erfindung betrifft eine Vorrichtung zum Bearbeiten eines Werkstückes mit einem Werkzeug, insbesondere mit einer Walzrolle, auf einer Spindel, auf die das Werkzeug in Drehrichtung formschlüssig aufgesetzt ist.

Eine solche Vorrichtung ist aus der Druckschrift GB-A-1 214 434 bekannt.

Bei vielen Herstellungsverfahren müssen Werkstücke mittels eines Werkzeuges bearbeitet werden, wobei das Werkzeug im wesentlichen rund ausgebildet ist und auf einer Spindel sitzt. Nur als Beispiel wird auf eine Vorrichtung zum Walzen von Gewinde mittels zweier gleichsinnig drehender Walzwerkzeuge verwiesen, wie sie in der EP 0 310 898 B1 beschrieben ist.

Eine mögliche Art der Festlegung eines Werkzeugs an einer Spindel wird in der US-A-3013827 offenbart. Mittels Bohrungen und Schlitzen wird ein Teil eines Werkzeugs zum nach innen gerichteten Verbiegen gegen eine Spindel vorbereitet. Mit einer Schraube, die in etwa tangential zur Umfangsrichtung der Spindel auf ein Widerlager wirkt, wird das zum Verbiegen vorbereitete Teil des Werkzeugs gegen die Spindel gepresst und so das Werkzeug an der Spindel durch Reibschluss festgelegt. Das Werkzeug kann dadurch an beliebiger Position in Umfangsrichtung an der Spindel festgelegt werden.

In der Regel werden derartige Werkzeuge auf die Spindel aufgeschoben und von vorne normal durch Druck (Verschrauben) gespannt und dann in die Vorrichtung eingesetzt. Um die Werkzeuge einigermassen drehfest auf die Spindel aufsetzen zu können, sind in der Regel als formschlüssige Verbindung Nuten in einem Teil vorgesehen, in welche Leisten in dem anderen Teil eingreifen. An dieser Stelle sei auf die Druckschrift GB-A-1214434 verwiesen. Verständlich ist, dass eine derartige formschlüssige Verbindung noch eine gewisse Toleranz aufweist, damit überhaupt das Werkzeug auf die Spindel aufgesetzt werden kann. Während dem Betrieb des Werkzeuges legt sich nun das Werkzeug innerhalb dieser Toleranz der formschlüssigen Verbindung an beispielsweise eine Flanke einer Keilnut an, so dass es zu einer, wenn auch geringfügigen Verstellung des Werkzeuges kommt.

Gerade beim Walzen von Verzahnungen mit höchster Präzision ist ein derartiges Verstellen nicht zu akzeptieren, zumal dieses "Anlegen" an einer Flanke der Keilnut nicht immer sofort beim ersten Teil erfolgt, sondern beim Bearbeiten von darauf folgenden Werkstücken. Dieses Anlegen kann sogar innerhalb bis zu hundert Werkstücken erfolgen. In jedem Fall muss die Stellung der Werkzeuge neu justiert werden.

Der vorliegenden Erfindung liegt die Aufgabe zugrunde, diesen Nachteil zu beseitigen und vor allem das Werkzeug auf der Spindel absolut drehfest festzulegen.

Zur Lösung dieser Aufgabe führt, dass dem Werkzeug zur Aufnahme eines etwa tangential zur Spindel gerichteten Druckes zumindest ein Widerlager zugeordnet ist, das von dem Werkzeug zumindest einerseits abragt oder in dieses eingreift.

Das bedeutet, dass bereits beim Festlegen des Werkzeuges dieses an eine Flanke od. dgl. der formschlüssigen Verbindung angepresst wird, so dass es nicht zu einem nachträglichen Verstellen des Werkzeuges während seiner Tätigkeit kommt.

In einem bevorzugten Ausführungsbeispiel handelt es sich bei dem Widerlager um einen Stift und hier wieder bevorzugt um einen Zylinderstift. Dieser Zylinderstift greift in eine Bohrung einer Spannscheibe ein, die neben dem Werkzeug auf die Spindel aufgesetzt ist. Dabei besitzt diese Bohrung einen grösseren Durchmesser als der Durchmesser des Zylinderstiftes, so dass dieser Zylinderstift in der Bohrung mit Spiel geführt ist.

Der Druck, der nun auf diesen Zylinderstift ausgeübt wird, erfolgt durch ein Einschrauben eines Gewindestiftes in eine Querbohrung, die wiederum auf die Bohrung trifft, in der der Zylinderstift sitzt. Das bedeutet, dass der Zylinderstift gegenüber seiner Bohrung innerhalb des vorhandenen Spiels exzentrisch versetzt wird, wodurch gleichzeitig ein relatives Drehen von Spannscheibe zu Werkzeug erfolgt. Durch dieses relative Drehen legen sich Spannscheibe und Werkzeug jeweils an gegenüberliegenden Flanken der formschlüssigen Verbindung an, so dass so beide Teile verspannt werden.

Der Zylinderstift soll nur als ein Ausführungsbeispiel einer Möglichkeit erwähnt sein, wie ein Druck in Umfangsrichtung auf das Werkzeug ausgeübt werden kann. In einem anderen Ausführungsbeispiel ist zwischen eine Spannscheibe und das Werkzeug eine Druckscheibe eingeschaltet, die jeweils mit einem Vorsprung in eine entsprechende Ausnehmung in dem Werkzeug bzw. in der Spannscheibe eingreift. Dabei soll die Ausnehmung in der Spannscheibe grösser sein als der Vorsprung, so dass der Vorsprung sich in dieser Ausnehmung, wenn er unter Druck gesetzt wird, bewegen kann. Hierdurch dreht die Druckscheibe und überträgt diese Drehung auf das Werkzeug, welches ebenfalls auf der Spindel gedreht wird. Der Druck kann auch hier der Einfachheit halber mittels einem entsprechenden Gewindestift erfolgen. Selbstverständlich kann der Druck bei diesem Ausführungsbeispiel, wie auch bei anderen denkbaren technischen Möglichkeiten durch eine entsprechende hydraulische oder pneumatische Einrichtung aufgebracht werden.

In einem bevorzugten Ausführungsbeispiel ist eine derartige Verspannung beidseits des Werkzeuges vorgesehen, so dass es auch nicht zu einem unerwünschten Kippen oder Verkanten des Werkzeuges kommen kann.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
Figur 1 eine teilweise aufgebrochen dargestellte Seitenansicht eines Ausschnittes aus einer erfindungsgemässen Vorrichtung zum Bearbeiten eines Werkstückes mit einem Werkzeug;
Figur 2 eine teilweise dargestellte Draufsicht auf einen teilweise aufgebrochen dargestellten Ausschnitt aus der Vorrichtung gemäss Figur 1;
Figur 3 eine Seitenansicht eine Ausschnittes aus einem weiteren Ausführungsbeispiel einer erfindungsgemässen Vorrichtung zum Bearbeiten eines Werkstückes mit einem Werkzeug;
Figur 4 eine Draufsicht auf das Werkzeug aus Figur 3;
Figur 5 eine Draufsicht auf eine Druckscheibe;
Figur 6 eine Draufsicht auf eine Spannscheibe.

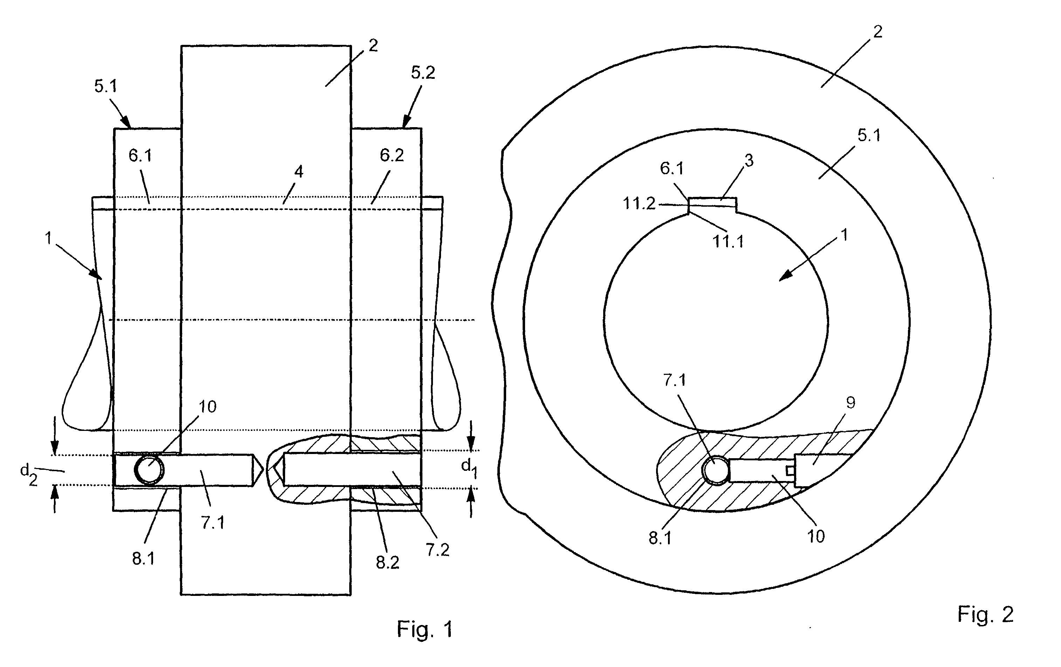

Von einer Vorrichtung zum Bearbeiten eines nicht näher gezeigten Werstückes ist in Figur 1 eine Spindel 1 zu erkennen, auf der ein Werkzeug 2, beispielsweise eine Walzrolle aufgesetzt ist. Der formschlüssigen Verbindung zwischen Spindel 1 und Walzrolle 2 dient eine Passfeder 3, die in eine Nut 4 in der Walzrolle 2 eingreift. Auf diese Weise ist die Walzrolle 2 mit der Spindel 1 relativ drehfest verbunden.

Beidseits der Walzrolle 2 ist jeweils eine Spannscheibe 5.1 und 5.2 vorgesehen. Die Spannscheiben 5.1 und 5.2 weisen ebenfalls Nuten 6.1 bzw. 6.2 auf, in welche die Passfeder 3 der Spindel 1 eingreift.

Achsparallel zur Spindel 1 ragen von der Walzrolle 2 jeweils beidseits Zylinderstifte 7.1 und 7.2 ab, welche in Bohrungen 8.1 und 8.2 in den Spannscheiben 5.1 und 5.2 eingreifen. Dabei ist ein Durchmesser d₁ der Bohrung 8.1 bzw. 8.2 grösser gewählt als ein Durchmesser d₂ der Zylinderstifte 7.1 bzw. 7.2.

Quer zur Bohrung 8.1 verläuft in der Spannscheibe 5.1 und auch, jedoch nicht gezeigt, in der Spannscheibe 5.2 eine Querbohrung 9, welche zumindest teilweise als Gewindebohrung ausgestaltet ist. In dieser Querbohrung 9 sitzt ein Gewindestift 10, der beim Einschrauben in der Querbohrung 9 auf den Zylinderstift 7.1 bzw. 7.2 trifft.

Die Funktionsweise der vorliegenden Erfindung ist folgende:

Beim Zusammensetzen der erfindungsgemässen Vorrichtung zum Bearbeiten eines Werkstückes wird die Walzrolle 2 auf die Spindel 1 aufgeschoben. Danach erfolgt ein Aufsetzen der Spannscheiben 5.1 und 5.2 jeweils beidseits der Walzrolle 2. Dabei greifen die Zylinderstifte 7.1 und 7.2 in die entsprechenden Bohrungen 8.1 und 8.2 ein.

Zum drehfesten Festlegen der Walzrolle 2 werden nun die Gewindestifte 10 in die Querbohrungen 9 eingedreht, wobei dies von entgegengesetzten Seiten aus erfolgt, sofern zwei Spannscheiben 5.1 und 5.2 vorgesehen sind.

Die Gewindestifte 10 treffen auf die Zylinderstifte 7.1 und 7.2, wodurch eine relative, gegenläufige Drehbewegung der Spannscheiben 5.1 und 5.2 gegenüber der Walzrolle 2 stattfindet. Hierdurch werden Spannscheibe 5.1 und 5.2 bzw. Walzrolle 2 gegen gegenüberliegende Flanken 11.1 bzw. 11.2 der Passfeder 3 gedrückt, sodass eine weitere Drehbewegung von Walzrolle 2 bzw. Spannscheiben 5.1 und 5.2 gänzlich ausgeschlossen ist.

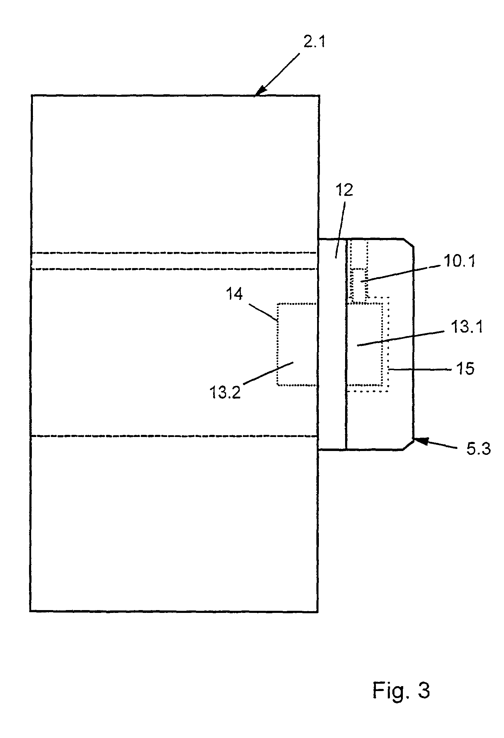

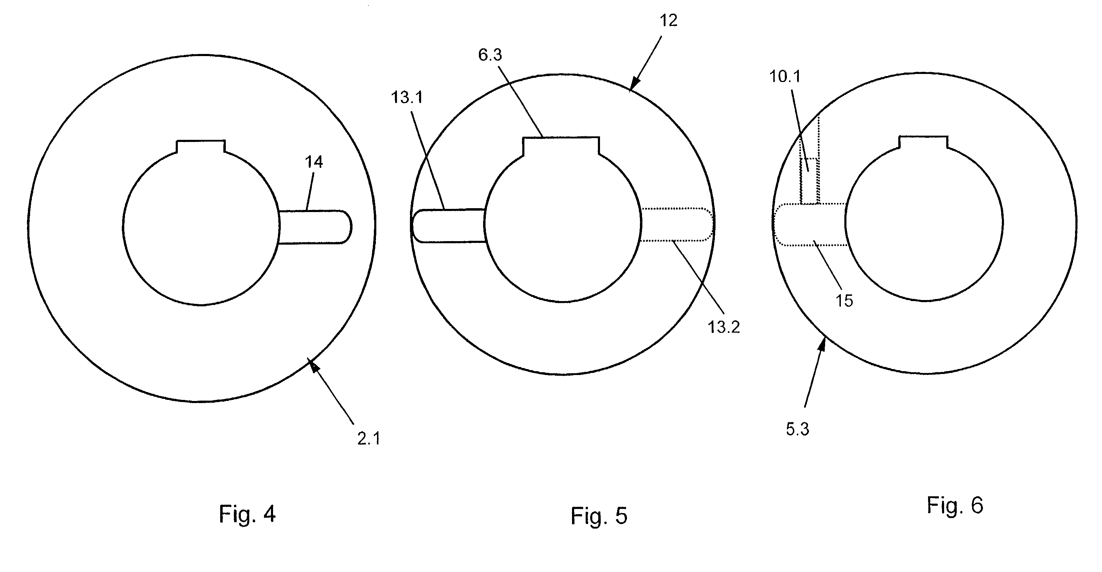

In einem weiteren Ausführungsbeispiel der Erfindung gemäss den Figuren 3 bis 6 ist zwischen eine Spannscheibe 5.3 und eine Walzrolle 2.1 eine Druckscheibe 12 eingesetzt. Diese Druckscheibe 12 besitzt auf ihren sich gegenüberliegenden Oberflächen jeweils einen Vorsprung 13.1 bzw. 13.2, der im vorliegenden Ausführungsbeispiel als Passfeder oder Keil ausgebildet ist. Es sind jedoch beliebige Ausgestaltungen denkbar.

Ferner weist die Druckscheibe 12 auch eine Nut 6.3 auf, die allerdings grösser ist als die jeweiligen Nuten in der Walzrolle 2.1 und der Spannscheibe 5.3, die in Gebrauchslage mit der Passfeder 3 auf der Spindel 1 die entsprechende formschlüssige Verbindung eingehen. Insofern kann die Druckscheibe 12 in gewissem Umfange um die Spindel gedreht werden. Die Walzrolle 2.1 besitzt eine Ausnehmung 40, die in ihrer Kontur im wesentlichen dem Vorsprung 13.2 angepasst ist.

Auf die Spannscheibe 5.3 besitzt eine nur gestrichelt angedeutete Ausnehmung 15, die allerdings in ihrer Kontur grösser ist als der Vorsprung 13.1.

In der in Figur 3 gezeigten Gebrauchslage sitzt die Druckscheibe 12 zwischen der Spannscheibe 5.3 und der Walzrolle 2.1. Dabei greift der Vorsprung 13.2 in die Ausnehmung 14 und der Vorsprung 13.1 in die Ausnehmung 15 ein. Auf den Vorsprung 13.1 drückt wiederum ein Gewindestift 10.1, so dass der Vorsprung 13.1 im Bereich der Ausnehmung 15 lagerverändert werden kann. Dabei dreht sich die Druckscheibe 12 und nimmt über den Vorsprung 13.2 in der Ausnehmung 14 auch die Walzrolle 2.1 mit. Diese wird dabei gegen die Passfeder 3 auf der Spindel 1 gedrückt.

### Positionszahlenliste

| | | | | | |
|---|---|---|---|---|---|
| 1 | Spindel | 34 | | 67 | |
| 2 | Walzrolle | 35 | | 68 | |
| 3 | Passfeder | 36 | | 69 | |
| 4 | Nut | 37 | | 70 | |
| 5 | Spannscheibe | 38 | | 71 | |
| 6 | Nut | 39 | | 72 | |
| 7 | Zylinderstift | 40 | | 73 | |
| 8 | Bohrung | 41 | | 74 | |
| 9 | Querbohrung | 42 | | 75 | |
| 10 | Gewindestift | 43 | | 76 | |
| 11 | Flanke | 44 | | 77 | |
| 12 | Druckscheibe | 45 | | 78 | |
| 13 | Vorsprung | 46 | | 79 | |
| 14 | Ausnehmung | 47 | | | |
| 15 | " | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Bearbeiten eines Werkstückes mit einem Werkzeug (2, 2.1), insbesondere mit einer Walzrolle, auf einer Spindel (1), auf die das Werkzeug (2, 2.1) in Drehrichtung formschlüssig aufgesetzt ist,
**dadurch gekennzeichnet,**
**dass** dem Werkzeug (2, 2.1) zur Aufnahme eines etwa tangential zur Spindel (1) gerichteten Druckes zumindest ein Widerlager (7.1, 7.2, 13.2) zugeordnet ist, das von dem Werkzeug (2, 2.1) zumindest einerseits abragt oder in dieses eingreift.

2. Vorrichtung nach Anspruch 1, **dadurch gekennzeichnet, dass** ein etwa achsparallel zur Spindel (1) verlaufender Stift (7.1, 7.2), insbesondere Zylinderstift, von dem Werkzeug (2) abragt.

3. Vorrichtung nach Anspruch 2, **dadurch gekennzeichnet, dass** der Stift (7.1, 7.2) in eine Bohrung (8.1, 8.2) einer Spannscheibe (5.1, 5.2) eingreift.

4. Vorrichtung nach Anspruch 3, **dadurch gekennzeichnet, dass** die Bohrung (8.1, 8.2) einen grösseren Durchmesser (d₁) aufweist als der Durchmesser (d₂) des Stiftes (7.1, 7.2).

5. Vorrichtung nach Anspruch 4, **dadurch gekennzeichnet, dass** in der Spannscheibe (5.1, 5.2) eine quer zur Bohrung (8.1, 8.2) verlaufende Querbohrung (9) vorgesehen ist.

6. Vorrichtung nach Anspruch 5, **dadurch gekennzeichnet, dass** in der Querbohrung (9) ein Gewindestift (10), beispielsweise eine Madenschraube, angeordnet ist, welche auf den Stift (7.1, 7.2) trifft.

7. Vorrichtung nach Anspruch 1, **dadurch gekennzeichnet, dass** eine Druckscheibe (12) mit einem Vorsprung (13.2 in eine dem Vorsprung angepasste Ausnehmung (14) in dem Werkzeug (2.1) eingreift.

8. Vorrichtung nach Anspruch 7, **dadurch gekennzeichnet, dass** die Druckscheibe (12) gegenüber dem Vorsprung (13.2) einen weiteren Vorsprung (13.1) aufweist, der in eine grössere Ausnehmung (15) in einer Spannscheibe (5.3) eingreift.

9. Vorrichtung nach einem der Ansprüche 3 bis 8, **dadurch gekennzeichnet, dass** die Spannscheibe (5.1, 5.2, 5.3) auf die Spindel (1) aufgesetzt ist und an dem Werkzeug (2, 2.1) anliegt.

10. Vorrichtung nach Anspruch 9, **dadurch gekennzeichnet, dass** die Spannscheibe (5.1, 5.2, 5.3) die gleiche formschlüssige Verbindung mit der Spindel (1) eingeht wie das Werkzeug (2, 2.1).

11. Vorrichtung nach wenigstens einem der Ansprüche 1 bis 10, **dadurch gekennzeichnet, dass** die formschlüssige Verbindung zwischen Spindel (1) und Werkzeug (2, 2.1) aus zumindest einer achsparallelen Passfeder (3) des einen Teils besteht, die in eine Nut (4, 6) in dem anderen Teil eingreift.

12. Vorrichtung nach wenigstens einem der Ansprüche 3 bis 11, **dadurch gekennzeichnet, dass** auf jeder Seite des Werkzeuges (2) eine Spannscheibe (5.1, 5.2, 5.3) vorgesehen ist.

## Claims

1. Apparatus for machining a workpiece, said apparatus having a tool (2, 2.1), more especially having a roller, on a spindle (1), upon which the tool (2, 2.1) is placed in a form-fitting manner when viewed with respect to the direction of rotation, **characterised in that** at least one abutment (7.1, 7.2, 13.2) is associated with the tool (2, 2.1) to absorb a pressure orientated substantially tangentially relative to the spindle (1), which abutment protrudes from the tool (2, 2.1), at least at one end, or engages in said tool.

2. Apparatus according to claim 1, **characterised in that** a pin (7.1, 7.2), more especially a cylinder pin, extending in a substantially axis-parallel manner relative to the spindle (1), protrudes from the tool (2).

3. Apparatus according to claim 2, **characterised in that** the pin (7.1, 7.2) engages in a bore (8.1, 8.2) of a clamping disc (5.1, 5.2).

4. Apparatus according to claim 3, **characterised in that** the bore (8.1, 8.2) has a greater diameter (d₁) than the diameter (d₂) of the pin (7.1, 7.2).

5. Apparatus according to claim 4, **characterised in that** a transverse bore (9), extending transversely relative to the bore (8.1, 8.2), is provided in the clamping disc (5.1, 5.2).

6. Apparatus according to claim 5, **characterised in that** a threaded pin (10), for example a set screw, which encounters the pin (7.1, 7.2), is disposed in the transverse bore (9).

7. Apparatus according to claim 1, **characterised in that** a pressure disc (12) with a projection (13.2) engages in a recess (14), adapted to the projection, in the tool (2.1).

8. Apparatus according to claim 7, **characterised in that** the pressure disc (12) has, opposite the projection (13.2), an additional projection (13.1) which engages in a larger recess (15) in a clamping disc (5.3).

9. Apparatus according to one of claims 3 to 8, **characterised in that** the clamping disc (5.1, 5.2, 5.3) is placed upon the spindle (1) and abuts against the tool (2, 2.1).

10. Apparatus according to claim 9, **characterised in that** the clamping disc (5.1, 5.2, 5.3) forms the same form-fitting connection with the spindle (1) as the tool (2, 2.1).

11. Apparatus according to at least one of claims 1 to 10, **characterised in that** the form-fitting connection between the spindle (1) and tool (2, 2.1) comprises at least one axis-parallel adjusting spring (3) of the one part, which spring engages in a groove (4, 6) in the other part.

12. Apparatus according to at least one of claims 3 to 11, **characterised in that** a clamping disc (5.1, 5.2, 5.3) is provided on each side of the tool (2).

## Revendications

1. Dispositif pour usiner une pièce avec un outil (2, 2.1), en particulier avec un cylindre de laminage, sur une broche (1) sur laquelle est placé l'outil (2, 2.1) en liaison de forme dans le sens de rotation,
**caractérisé par le fait**
**qu'**à l'outil (2, 2.1) est associé, pour recevoir une pression orientée environ tangentiellement à la broche (1), au moins un contre-palier (7.1, 7.2, 13.2) qui ressort, au moins d'un côté, de l'outil (2, 2.1) ou s'engage dans ce dernier.

2. Dispositif selon la revendication 1, **caractérisé par le fait qu'**une goupille (7.1, 7.2) s'étendant environ parallèle à l'axe par rapport à la broche (1), en particulier une goupille cylindrique, ressort de l'outil (2).

3. Dispositif selon la revendication 2, **caractérisé par le fait que** la goupille (7.1, 7.2) s'engage dans un alésage (8.1, 8.2) d'un disque de serrage (5.1, 5.2).

4. Dispositif selon la revendication 3, **caractérisé par le fait que** l'alésage (8.1, 8.2) présente un diamètre (d₁) supérieur au diamètre (d₂) de la goupille (7.1, 7.2).

5. Dispositif selon la revendication 4, **caractérisé par le fait que** dans le disque de serrage (5.1, 5.2) est prévu un alésage transversal (9) s'étendant transversalement à l'alésage (8.1, 8.2).

6. Dispositif selon la revendication 5, **caractérisé par le fait que** dans l'alésage transversal (9) est disposée une vis sans tête (10), par exemple un goujon fileté, qui vient heurter la goupille (7.1, 7.2).

7. Dispositif selon la revendication 1, **caractérisé par le fait qu'**une rondelle de pression (12) s'engage, par une saillie (13.2) dans un évidement (14) adapté à la saillie dans l'outil (2.1).

8. Dispositif selon la revendication 7, **caractérisé par le fait que** la rondelle de pression (12) présente, vis-à-vis de la saillie (13.2), une autre saillie (13.1) qui s'engage dans un évidement (15) plus grand dans un disque de serrage (5.3).

9. Dispositif selon l'une des revendications 3 à 8, **caractérisé par le fait que** le disque de serrage (5.1, 5.2, 5.3) est placé sur la broche (1) et s'appuie contre l'outil (2, 2.1).

10. Dispositif selon la revendication 9, **caractérisé par le fait que** le disque de serrage (5.1, 5.2, 5.3) adopte la même connexion en liaison de forme avec la broche (1) que l'outil (2 2.1).

11. Dispositif selon au moins l'une des revendication 1 à 10, **caractérisé par le fait que** la connexion en liaison de forme entre la broche (1) et l'outil (2, 2.1) se compose d'au moins une clavette (3) parallèle à l'axe de l'une des parties qui s'engage dans une rainure (4, 6) dans l'autre partie.

12. Dispositif selon au moins l'une des revendications 3 à 11, **caractérisé par le fait que** de chaque côté de l'outil (2) est prévu un disque de serrage (5.1, 5.2, 5.3).
